# EUROPEAN PATENT SPECIFICATION

(11) **EP 3 276 926 B1**
(45) Date of publication and mention of the grant of the patent: **20.03.2019**
(21) Application number: 15889457.6
(22) Date of filing: 20.04.2015
(51) Int. Cl.: H04M 1/725, H04B 15/04, H01Q 1/52, H04N 5/232

(54) **METHOD AND APPARATUS FOR PREVENTING CAMERA FROM INTERFERING WITH ANTENNA IN AN ELECTRONIC DEVICE**
VERFAHREN UND VORRICHTUNG ZUR VERHINDERUNG VON INTERFERENZEN ZWISCHEN KAMERA UND ANTENNE IN EINEM ELEKTRONISCHEN GERÄT
PROCÉDÉ ET APPAREIL POUR EMPÊCHER UNE CAMÉRA D'INTERFÉRER AVEC UNE ANTENNE DANS UN DISPOSITIF ÉLECTRONIQUE

(43) Date of publication of application: 31.01.2018
(73) Proprietor: Huawei Technologies Co. Ltd., Shenzhen, Guangdong 518129 (CN)
(72) Inventor: WANG, Sheng, Shenzhen Guangdong 518129 (CN); WANG, Kemeng, Shenzhen Guangdong 518129 (CN)
(74) Representative: Gill Jennings & Every LLP
(86) International application number: PCT/CN2015/076969
(87) International publication number: WO 2016/168966

(56) References cited:
- EP-A1- 2 334 045
- WO-A1-2013/147768
- CN-A- 1 697 333
- CN-A- 104 683 540
- JP-A- 2006 197 451
- US-A1- 2005 255 881
- US-A1- 2007 014 556

## Description

### TECHNICAL FIELD

The present invention relates to the field of communications technologies, and in particular, to a method and an apparatus for preventing a camera from interfering with an antenna, and an electronic device.

### BACKGROUND

As electronic devices trend toward being lighter and thinner, internal layouts of electronic devices become more compact. Consequently, a camera is easily close to an antenna. However, after the camera is started, a high-speed signal generated by the camera enters the antenna, and forms intermodulation interference with a signal received by the antenna, affecting antenna performance of the electronic device. Consequently, call or data service performance is degraded.

In technical solutions of the prior art, a shielding material is usually used to package a flexible printed circuit board and a base of a camera module, to decrease camera impact on antenna performance.

In a process of implementing the present invention, it is found that the prior art has at least the following problem: A connector of a camera module still leaks some signals, and consequently antenna performance of an electronic device is affected.

EP 2 334 045 relates to mobile terminal for varying frequency of camera clock and control method thereof. US 2007/0014556 relates to communications devices including integrated digital cameras operating at different frequencies and related methods. US 2005/0255881 relates to portable telephone apparatus with camera. WO 2013/147768 relates to dynamically adaptive frequency adjustments.

### SUMMARY

To resolve a problem in the prior art that a connector of a camera module leaks some signals, and consequently antenna performance of an electronic device is affected, embodiments of the present invention provide a method and an apparatus for preventing a camera from interfering with an antenna, and an electronic device.

In particular, various aspects of present invention are defined in the independent claims. Further technical features of each of the aspects are defined in the respective dependent claims.

The embodiments and/or examples disclosed in the following description which are not covered by the appended claims are considered as not being part of the present invention.

According to the method and apparatus for preventing a camera from interfering with an antenna and the electronic device provided in the embodiments of the present description, when a camera is started and an electronic device successfully camps on a network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, the interference from the camera to the antenna can be eliminated by changing the configuration parameter of the camera, so as to resolve the problem that a connector of a camera module leaks some signals, and consequently the antenna performance of the electronic device is affected. Therefore, the interference from the camera to the antenna is eliminated and stability of the antenna performance is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a method flowchart of a method for preventing a camera from interfering with an antenna according to an embodiment of the present invention;
FIG. 2 is a method flowchart of a method for preventing a camera from interfering with an antenna according to another embodiment of the present invention;
FIG. 3 is a method flowchart of a method for preventing a camera from interfering with an antenna according to still another embodiment of the present invention;
FIG. 4 is a schematic structural diagram of an apparatus for preventing a camera from interfering with an antenna according to an embodiment of the present invention;
FIG. 5 is a schematic structural diagram of an apparatus for preventing a camera from interfering with an antenna according to another embodiment of the present invention;
FIG. 6 is a schematic structural diagram of an electronic device according to an embodiment of the present invention; and
FIG. 7 is a schematic structural diagram of an electronic device according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

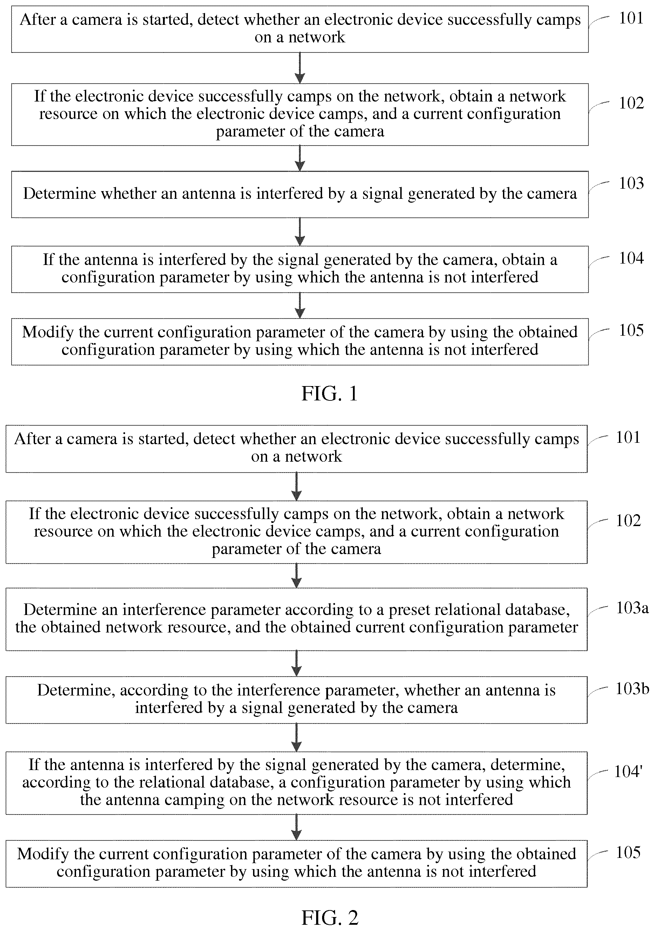

Referring to FIG. 1, FIG. 1 shows a method flowchart of a method for preventing a camera from interfering with an antenna according to an embodiment of the present invention. The method for preventing a camera from interfering with an antenna is mainly applied to, for example, an electronic device having a camera and an antenna. The electronic device described herein may be, for example, a smartphone, a tablet computer, a smart television, an ebook reader, a multimedia player, and a portable laptop computer. The method for preventing a camera from interfering with an antenna may include the following steps.

Step 101: After the camera is started, detect whether the electronic device successfully camps on a network.

The successfully camping on the network described herein refers to that the electronic device successfully camps on a digital network, for example, a second generation (English: Second Generation, 2G for short) mobile communications technology, a third generation (English: Third Generation, 3G for short) mobile communications technology, a fourth generation (English: Fourth Generation, 4G for short) mobile communications technology, or Long Term Evolution (English: Long Term Evolution, LTE for short).

Step 102: If the electronic device successfully camps on the network, obtain a network resource on which the electronic device camps, and a current configuration parameter of the camera.

When the electronic device successfully camps on the network, it indicates that the electronic device may have a call and may receive and send a short message service message, or may use the digital network to request a network service, for example, browse a web page, download a network resource, upload a resource, and receive and send an instant messaging message.

In a practical application scenario, when the electronic device successfully camps on the network, the following multiple scenarios are included.

In a scenario, a digital service of the electronic device is turned on and a signal is relatively good. In this case, the electronic device may use the digital network to browse a web page, and may use the digital network to have a call or receive and send a short message service message, and the like.

In another scenario, the digital service of the electronic device is turned off by a user. In this case, the electronic device cannot use the digital network to perform operations such as browse a web page, but may use the digital network to have a call or receive and send a short message service message.

The network resource described herein may include the first one, the first two, or all of a frequency band, a channel, and a bandwidth. That is, the network resource herein may be divided according to a dimension of a frequency band. To implement more detailed division, different channels in the frequency band may be distinguished, to implement finer control. For a variable-bandwidth network, for example, an LTE network, the network resource may be further divided according to a channel and a bandwidth.

A configuration parameter of a camera includes a resolution and a frame rate that are configured for the camera.

Each configuration parameter of the camera affects an antenna camping on some network resources. Therefore, to determine whether the antenna is interfered by a signal generated by the camera, the network resource on which the electronic device camps and the current configuration parameter of the camera need to be obtained.

Step 103: Determine whether the antenna is interfered by a signal generated by the camera.

A signal may be generated after the camera is started, and the signal probably enters the antenna and affects communication of the antenna. Therefore, to prevent the signal generated by the started camera from affecting the antenna, whether the antenna is interfered by the signal generated by the camera needs to be determined.

Step 104: If the antenna is interfered by the signal generated by the camera, obtain a configuration parameter by using which the antenna is not interfered.

Step 105: Modify the current configuration parameter of the camera by using the obtained configuration parameter by using which the antenna is not interfered.

In conclusion, according to the method for preventing a camera from interfering with an antenna provided in this embodiment of the present invention, when a camera is started and an electronic device successfully camps on a network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, interference from the camera to the antenna can be eliminated by changing the configuration parameter of the camera, so as to resolve the problem that a connector of a camera module leaks some signals, and consequently the antenna performance of the electronic device is affected. Therefore, interference from the camera to the antenna is eliminated, stability of the antenna performance is improved, and a disadvantage that interference from the camera to the antenna cannot be completely avoided by using hardware is overcome.

In an actual application, the electronic device may use a relational database to determine whether the antenna is interfered by the signal generated by the camera. That is, step 103 in FIG. 1 is replaced with step 103a and step 103b in FIG. 2. For details, refer to description of FIG. 2.

Referring to FIG. 2, FIG. 2 shows a method flowchart of a method for preventing a camera from interfering with an antenna according to another embodiment of the present invention. The method for preventing a camera from interfering with an antenna is mainly applied to, for example, an electronic device having a camera and an antenna. The electronic device described herein may be, for example, a smartphone, a tablet computer, a smart television, an ebook reader, a multimedia player, and a portable laptop computer. The method for preventing a camera from interfering with an antenna may include the following steps.

Step 101: After the camera is started, detect whether the electronic device successfully camps on a network.

Step 102: If the electronic device successfully camps on the network, obtain a network resource on which the electronic device camps, and a current configuration parameter of the camera.

For both step 101 and step 102, refer to the description of step 101 and step 102 in FIG. 1. Details are not described herein again.

Step 103a: Determine an interference parameter according to a preset relational database, the obtained network resource, and the obtained current configuration parameter.

The relational database described herein stores a correspondence between each network resource and each configuration parameter and an interference parameter. The interference parameter is used to indicate whether the antenna camping on the network resource is interfered by a signal generated by the camera that is started by using the configuration parameter.

Generally, each interference parameter in the relational database is used to correspond to one group of a configuration parameter and a network resource. That is, the interference parameter is used to indicate whether a signal generated by a camera configured with the configuration parameter interferes with an antenna camping on the network resource.

For example, refer to the following Table 1. The header of Table 1 includes several configuration parameters. The configuration parameters respectively are: a resolution of 1080p and a frame rate of 30fps (represented by 1080p@30fps in Table 1), a resolution of 1080p and a frame rate of 15fps (represented by 1080p @ 15fps in Table 1), a resolution of 720p and a frame rate of 30fps (represented by 720p@30fps in Table 1), and a resolution of 720p and a frame rate of 15fps (represented by 720p@ 15fps in Table 1). The first column in Table 1 includes several network resources: B1, B2, B3, and the like. Apparently, in an actual application, the configuration parameter is not limited to the configuration parameters listed in Table 1.

**Table 1**

| | 1080p@30fps | 1080p@15fps | 720p@30fps | 720p@15fps |
|---|---|---|---|---|
| B1 | Y | N | N | N |
| B2 | N | N | Y | N |
| B3 | Y | Y | N | N |
| ... | ... | ... | ... | ... |

In Table 1, "Y" indicates that there is interference, and "N" indicates that there is no interference.

For example, Y corresponding to B1 and 1080p@30fps is used to indicate that a signal generated by the camera configured with 1080p@30fps interferes with the antenna camping on B1.

For another example, N corresponding to B1 and 1080p@15fps is used to indicate that a signal generated by the camera configured with 1080p@15fps does not interfere with the antenna camping on B1.

The electronic device may determine an interference parameter according to the relational database corresponding to the table, the obtained network resource, and the obtained current configuration parameter. For example, when the obtained network resource is 1080p@15fps, and the current configuration parameter is B3, the electronic device determines that the interference parameter is Y according to the relational database, the network resource, and the current configuration parameter.

Step 103b: Determine, according to the interference parameter, whether the antenna is interfered by a signal generated by the camera.

The interference parameter is used to indicate whether the signal generated by the camera configured with the configuration parameter interferes with the antenna camping on the network resource. Therefore, the electronic device may determine, according to the interference parameter, whether the antenna is interfered by the signal generated by the camera.

For example, when the interference parameter is Y, it indicates that the antenna is interfered by the signal generated by the camera; and when the interference parameter is N, it indicates that the antenna is not interfered by the signal generated by the camera.

If the antenna is interfered by the signal generated by the camera, a configuration parameter by using which the antenna is not interfered is obtained. In a possible implementation manner, the electronic device may also use the relational database to obtain the configuration parameter by using which the antenna is not interfered. That is, step 104 in FIG. 1 is replaced with step 104'.

Step 104': If the antenna is interfered by the signal generated by the camera, determine, according to the relational database, a configuration parameter by using which the antenna camping on the network resource is not interfered.

Similarly, the relational database is searched for the configuration parameter by using which the antenna camping on the network resource is not interfered.

Optionally, if the electronic device finds multiple configuration parameters by using which the antenna camping on the network resource is not interfered, the electronic device may randomly select a configuration parameter from the configuration parameters by using which there is no interference, select a configuration parameter with a maximum configuration, select a configuration parameter that is superior to the current configuration parameter, select a configuration parameter that is inferior to the current configuration parameter, select a configuration parameter with a minimum configuration from the configuration parameters that are superior to the current configuration parameter, select a configuration parameter with a maximum configuration from the configuration parameters that are inferior to the current configuration parameter, or the like.

Optionally, if the electronic device finds multiple configuration parameters by using which the antenna camping on the network resource is not interfered, the configuration parameters by using which there is no interference may be displayed to remind a user to select one of the configuration parameters.

Step 105: Modify the current configuration parameters of the camera by using the obtained configuration parameters by using which the antenna is not interfered.

That is, the current configuration parameter of the camera is replaced with the obtained configuration parameters by using which the antenna is not interfered, and a signal generated by the camera no longer interferes with the antenna after replacement.

In conclusion, according to the method for preventing a camera from interfering with an antenna provided in this embodiment of the present invention, when a camera is started and an electronic device successfully camps on a network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, the interference from the camera to the antenna can be eliminated by changing the configuration parameter of the camera, so as to resolve the problem that a connector of a camera module leaks some signals, and consequently the antenna performance of the electronic device is affected. Therefore, interference from the camera to the antenna is eliminated, stability of the antenna performance is improved, and a disadvantage that interference from the camera to the antenna cannot be completely avoided by using hardware is overcome.

In a possible implementation scenario, if an antenna is not interfered by a signal generated by the camera, the current configuration parameter of the camera may be maintained unchanged, to avoid as much as possible interference caused by modification of the configuration parameter.

Apparently, as long as it is determined each time that the antenna is not interfered by the signal generated by the camera, the current configuration parameter of the camera is maintained unchanged.

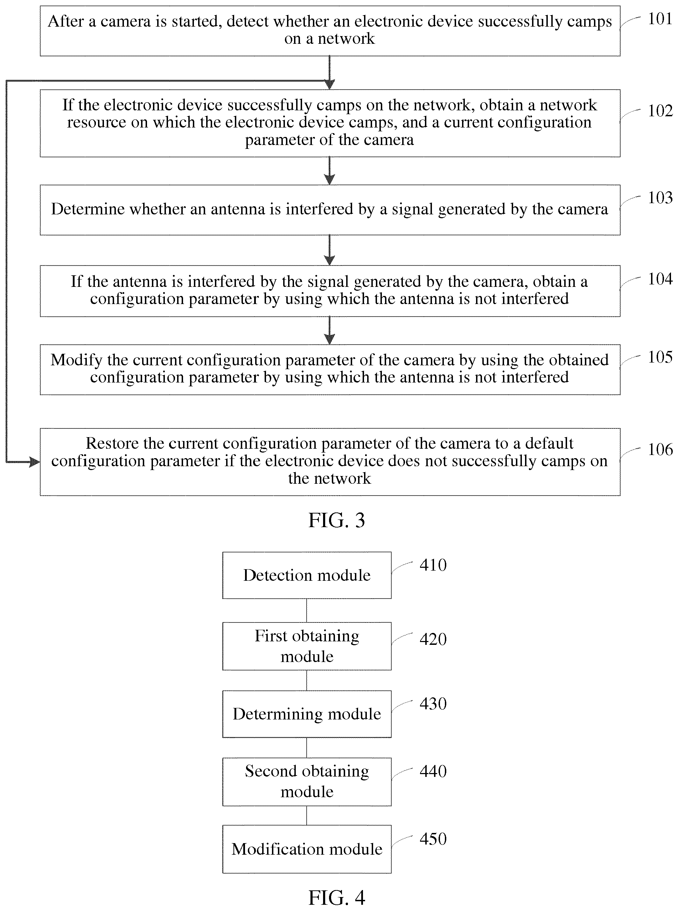

In a possible implementation scenario, referring to FIG. 3, after step 101, the method for preventing a camera from interfering with an antenna may further include the following step:

Step 106: Restore the current configuration parameter of the camera to a default configuration parameter if the electronic device does not successfully camp on the network.

In a practical application scenario, when the electronic device does not successfully camp on the network, the following multiple scenarios are usually included.

In a scenario, the electronic device is in an airplane mode. In this case, the electronic device can neither use a digital network to implement operations such as browse a web page, nor use the digital network to have a call, receive and send a short message service message, or the like.

In another scenario, a signal of a digital network that is received by the electronic device is relatively poor, or the electronic device cannot directly receive a signal of the digital network. In this case, the electronic device is approximately in an airplane mode, that is, the electronic device can neither use the digital network to implement operations such as browse a web page, nor use the digital network to have a call, receive and send a short message service message, or the like.

Therefore, when the electronic device does not successfully camp on the network, the antenna cannot receive or send a signal. In this case, regardless of the configuration parameter of the camera, the antenna is not affected. The current configuration parameter of the camera may be restored to a default configuration parameter, so that the configuration parameter of the camera can meet a shooting requirement of a user as much as possible. The default configuration parameter is usually a parameter that is preferentially configured by the user, or a parameter that is preferentially configured by the system for the user and that relatively meets a requirement of the user.

In a possible implementation scenario, after the electronic device configures, for the camera, a configuration parameter by using which the antenna is not interfered, the electronic device needs to continue detecting whether the electronic device still camps on the network. When the electronic device does not camp on the network, a corresponding adjustment may be made to better satisfy the shooting requirement of the user. For example, the current configuration parameter of the camera may be restored to the default configuration parameter.

Step 102 to step 105 in FIG. 3 are separately the same as step 102 to step 105 in FIG. 1, and details are not described herein again.

It should be additionally noted that, because the network resource on which the antenna camps may change subsequently, or the antenna may change from a state in which the antenna camps on the network to a state in which the antenna does not camp on the network, after the configuration parameter by using which the antenna is not interfered is configured for the camera, it also needs to be detected whether the electronic device successfully camps on a network. If the electronic device no longer successfully camps on a network, step 106 is performed. If the electronic device successfully camps on a network, perform step 102 again. A network resource that is obtained in this case may be different from the network resource obtained previously. That is, the network resource on which the electronic device camps may change. Then, step 103 to step 105 are used to select a configuration parameter by using which the antenna camping on the new network resource is not interfered, and the configuration parameter is configured for the camera.

In conclusion, according to the method for preventing a camera from interfering with an antenna, when it is detected that the electronic device changes from a state in which the antenna camps on the network to a state in which the antenna does not camp on the network, a default configuration parameter is configured for the camera again, so as to resolve a problem that user shooting experience is relatively poor because the camera still operates by using a non-default configuration parameter when the electronic device does not camp on the network. Therefore, user shooting experience and shooting quality are improved.

In addition, a network resource on which the antenna camps is obtained in real time, whether the antenna is interfered by a signal generated by the camera is determined, and a configuration parameter by using which the antenna is not interfered is configured for the camera in real time when the antenna is interfered, so as to resolve a problem that, in an operating process of the camera, after the network resource of the network on which the electronic device camps changes, the camera interferes with the changed network resource. Therefore, stability of antenna performance is improved.

In a possible implementation scenario, the camera that uses a configuration parameter having a high resolution and a high frame rate can shoot a photo having relatively good definition and fluency, but the shot photo occupies more memory space. Therefore, in a process of obtaining a configuration parameter by using which the antenna is not interfered, a suitable configuration parameter may be selected for the user as much as possible, so that the camera that uses the configuration parameter can shoot a photo that has relatively good definition and fluency, and that occupies less memory space.

For example, the electronic device sequentially searches, according to a first predetermined sequence, a first pre-stored parameter group for a configuration parameter by using which the antenna is not interfered.

The first parameter group includes at least one group of correspondence. The correspondence includes a configuration parameter, a network resource, and an interference parameter. The configuration parameter includes a resolution and a frame rate. The resolution of the correspondence in the first parameter group is higher than or equal to a resolution of the current configuration parameter. The first predetermined sequence is an ascending order of resolutions, or is an ascending order of frame rates when the resolutions are the same.

Optionally, in a processing of obtaining a configuration parameter by using which the antenna is not interfered, when the data in the relational database is stored in a form shown in Table 1, for a same network resource, the configuration parameters may be arranged from left to right in descending order of the resolutions, to conveniently search for the suitable configuration parameter. When the resolutions are the same, a configuration parameter including a higher frame rate is arranged first, and a configuration parameter including a lower frame rate is arranged subsequently. That is, the resolutions of the configuration parameters in the header of Table 1 are arranged from left to right in descending order, and the frame rates are arranged from left to right in descending order when the resolutions are the same.

For example, referring to Table 1, according to the first predetermined sequence, searching is performed towards left from a currently found interference parameter in Table 1. If an interference parameter used to indicate that there is no interference is found, a first found interference parameter used to indicate that there is no interference is obtained, and a configuration parameter corresponding to the interference parameter is obtained. For example, when the current configuration parameter is 720p@30fps, and a network resource on which the antenna camps is B2, an obtained interference parameter is Y. A first interference parameter that is found from the interference parameter towards left is N. In this case, a configuration parameter of 1080p@15fps corresponding to the interference parameter is obtained.

For another example, the electronic device sequentially searches, according to a second predetermined sequence, a second pre-stored parameter group for a configuration parameter by using which the antenna is not interfered.

The second parameter group includes at least one group of correspondence. The correspondence includes a configuration parameter, a network resource, and an interference parameter. The configuration parameter includes a resolution and a frame rate. The resolution of the correspondence in the second parameter group is less than or equal to a resolution of the current configuration parameter. The second predetermined sequence is a descending order of resolutions, or is a descending order of frame rates when the resolutions are the same.

Optionally, in a processing of obtaining a configuration parameter by using which the antenna is not interfered, when the data in the relational database is stored in a form shown in Table 1, for a same network resource, configuration parameters may be arranged from left to right in descending order of the resolutions, to conveniently search for the suitable configuration parameter. When the resolutions are the same, a configuration parameter including a higher frame rate is arranged first, and a configuration parameter including a lower frame rate is arranged subsequently.

For example, referring to Table 1, according to the second predetermined sequence, searching is performed towards right from a currently found interference parameter in Table 1. If an interference parameter used to indicate that there is no interference is found, a first found interference parameter used to indicate that there is no interference is obtained, and a configuration parameter corresponding to the interference parameter is obtained. For example, when the current configuration parameter is 1080p@15fps, and a network resource on which the antenna camps is B3, an obtained interference parameter is Y. When searching is performed from the interference parameter towards left and an interference parameter used to indicate that there is no interference is not found, continue to perform searching towards right, a first found interference parameter used to indicate that there is no interference is obtained, and a configuration parameter of 720p@30fps corresponding to the interference parameter is obtained.

Referring to FIG. 4, FIG. 4 shows a schematic structural diagram of an apparatus for preventing a camera from interfering with an antenna according to an embodiment of the present invention. The apparatus for preventing a camera from interfering with an antenna is mainly applied to, for example, an electronic device having a camera and an antenna. The electronic device described herein may be, for example, a smartphone, a tablet computer, a smart television, an ebook reader, a multimedia player, and a portable laptop computer. The apparatus for preventing a camera from interfering with an antenna may include: a detection module 410, a first obtaining module 420, a determining module 430, a second obtaining module 440, and a modification module 450.

The detection module 410 is configured to: after the camera is started, detect whether the electronic device successfully camps on a network.

The first obtaining module 420 is configured to: when the detection module 410 detects that the electronic device successfully camps on the network, obtain a network resource on which the electronic device camps, and a current configuration parameter of the camera.

The determining module 430 is configured to determine whether the antenna is interfered by a signal generated by the camera.

The second obtaining module 440 is configured to: when the determining module 430 determines that the antenna is interfered by the signal generated by the camera, obtain a configuration parameter by using which the antenna is not interfered.

The modification module 450 is configured to modify the current configuration parameter of the camera that is obtained by the first obtaining module 420, by using the configuration parameter by using which the antenna is not interfered and that is obtained by the second obtaining module 440.

In conclusion, according to the apparatus for preventing a camera from interfering with an antenna provided in this embodiment of the present invention, when a camera is started and an electronic device successfully camps on a network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, the interference from the camera to the antenna can be eliminated by changing the configuration parameter of the camera, so as to resolve the problem that a connector of a camera module leaks some signals, and consequently the antenna performance of the electronic device is affected. Therefore, interference from the camera to the antenna is eliminated, stability of the antenna performance is improved, and a disadvantage that interference from the camera to the antenna cannot be completely avoided by using hardware is overcome.

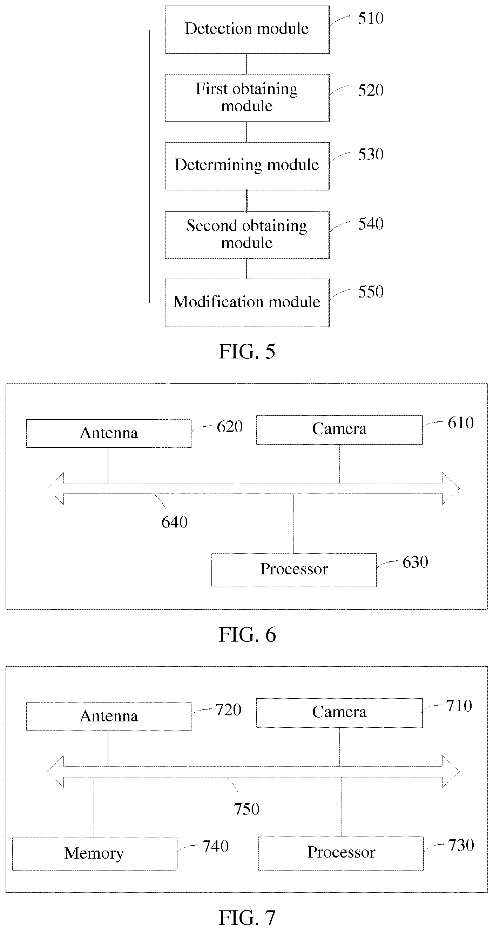

Referring to FIG. 5, FIG. 5 shows a schematic structural diagram of an apparatus for preventing a camera from interfering with an antenna according to another embodiment of the present invention. The apparatus for preventing a camera from interfering with an antenna is mainly applied to, for example, an electronic device having a camera and an antenna. The electronic device described herein may be, for example, a smartphone, a tablet computer, a smart television, an ebook reader, a multimedia player, and a portable laptop computer. The apparatus for preventing a camera from interfering with an antenna may include: a detection module 510, a first obtaining module 520, a determining module 530, a second obtaining module 540, and a modification module 550.

The detection module 510 is configured to: after the camera is started, detect whether the electronic device successfully camps on a network.

The first obtaining module 520 is configured to: when the detection module 510 detects that the electronic device successfully camps on the network, obtain a network resource on which the electronic device camps, and a current configuration parameter of the camera.

The determining module 530 is configured to determine whether the antenna is interfered by a signal generated by the camera.

The second obtaining module 540 is configured to: when the determining module 530 determines that the antenna is interfered by the signal generated by the camera, obtain a configuration parameter by using which the antenna is not interfered.

The modification module 550 is configured to modify the current configuration parameter of the camera that is obtained by the first obtaining module 520, by using the configuration parameter by using which the antenna is not interfered and that is obtained by the second obtaining module 540.

In a possible implementation manner, the determining module 530 is specifically configured to:
determine an interference parameter according to a preset relational database, the obtained network resource, and the obtained current configuration parameter, where the relational database stores a correspondence between each network resource and each configuration parameter and an interference parameter, and the interference parameter is used to indicate whether an antenna camping on the network resource is interfered by a signal generated by the camera that is started by using the configuration parameter; and
determine, according to the interference parameter, whether the antenna is interfered by the signal generated by the camera.

In a possible implementation manner, the second obtaining module 540 is specifically configured to:
determine, according to the relational database, the configuration parameter by using which the antenna camping on the network resource is not interfered.

In a possible implementation manner, the modification module 550 is further configured to maintain the current configuration parameter unchanged when the determining module 530 determines that the antenna is not interfered by the signal generated by the camera.

In a possible implementation manner, the modification module 550 is further configured to restore the current configuration parameter of the camera to a default configuration parameter when the detection module 510 detects that the electronic device does not successfully camp on the network.

In a possible implementation manner, the network resource includes the first one, the first two, or all of a frequency band, a channel, and a bandwidth.

In conclusion, according to the apparatus for preventing a camera from interfering with an antenna provided in this embodiment of the present invention, when a camera is started and an electronic device successfully camps on a network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, the interference from the camera to the antenna can be eliminated by changing the configuration parameter of the camera, so as to resolve the problem that a connector of a camera module leaks some signals, and consequently the antenna performance of the electronic device is affected. Therefore, interference from the camera to the antenna is eliminated, stability of the antenna performance is improved, and a disadvantage that interference from the camera to the antenna cannot be completely avoided by using hardware is overcome.

In addition, when it is detected that the electronic device changes from a state in which the antenna camps on the network to a state in which the antenna does not camp on the network, a default configuration parameter is configured for the camera again, so as to resolve a problem that user shooting experience is relatively poor because the camera still operates by using a non-default configuration parameter when the electronic device does not camp on the network. Therefore, user shooting experience and shooting quality are improved.

In addition, a network resource on which the antenna camps is obtained in real time, whether the antenna is interfered by a signal generated by the camera is determined, and a configuration parameter by using which the antenna is not interfered is configured for the camera in real time when the antenna is interfered, so as to resolve a problem that, in an operating process of the camera, after the network resource of the network on which the electronic device camps changes, the camera interferes with the changed network resource. Therefore, stability of antenna performance is improved.

It should be noted that, when the apparatus for preventing a camera from interfering with an antenna provided in the foregoing embodiment prevents the camera from interfering with the antenna, division of the functional modules is merely used as an example for description. In a practical application, the functions may be allocated to and implemented by different functional modules according to needs. That is, an internal structure of an electronic device is divided into different functional modules to implement all or some of the functions described above. In addition, the apparatus for preventing a camera from interfering with an antenna and the method for preventing a camera from interfering with an antenna provided in the foregoing embodiments belong to a same concept. For a specific implementation process thereof, refer to the embodiments of the method, and details are not described herein again.

Referring to FIG. 6, FIG. 6 shows a schematic structural diagram of an electronic device according to an embodiment of the present invention. The electronic device may include: a camera 610, an antenna 620, and a processor 630, where the camera 610 and the antenna 620 are separately connected to the processor 630 by using a bus 640.

The processor 630 is configured to: after the camera 610 is started, detect whether the electronic device successfully camps on a network.

The processor 630 is further configured to: when the electronic device successfully camps on the network, obtain a network resource on which the electronic device camps, and a current configuration parameter of the camera 610.

The processor 630 is further configured to determine whether the antenna 620 is interfered by a signal generated by the camera 610.

The processor 630 is further configured to: when the antenna 620 is interfered by the signal generated by the camera 610, obtain a configuration parameter by using which the antenna 620 is not interfered.

The processor 630 is further configured to modify the current configuration parameter of the camera 610 by using the configuration parameter by using which the antenna 620 is not interfered.

In conclusion, according to the electronic device provided in this embodiment of the present invention, when a camera is started and an electronic device successfully camps on a network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, the interference from the camera to the antenna can be eliminated by changing the configuration parameter of the camera, so as to resolve the problem that a connector of a camera module leaks some signals, and consequently the antenna performance of the electronic device is affected. Therefore, interference from the camera to the antenna is eliminated, stability of the antenna performance is improved, and a disadvantage that interference from the camera to the antenna cannot be completely avoided by using hardware is overcome.

Referring to FIG. 7, FIG. 7 shows a schematic structural diagram of an electronic device according to another embodiment of the present invention. The electronic device may include: a camera 710, an antenna 720, and a processor 730, where the camera 710 and the antenna 720 are separately connected to the processor 730 by using a bus 750. The processor 730 performs the following operations:
The processor 730 is configured to: after the camera 710 is started, detect whether the electronic device successfully camps on a network.

The processor 730 is further configured to: when the electronic device successfully camps on the network, obtain a network resource on which the electronic device camps, and a current configuration parameter of the camera 710.

The processor 730 is further configured to determine whether the antenna 720 is interfered by a signal generated by the camera 710.

The processor 730 is further configured to: when the antenna 720 is interfered by the signal generated by the camera 710, obtain a configuration parameter by using which the antenna 720 is not interfered.

The processor 730 is further configured to modify the current configuration parameter of the camera 710 by using the configuration parameter by using which the antenna 720 is not interfered.

In a possible implementation manner, the electronic device further includes a memory 740, where the memory 740 is connected to the processor 730 by using the bus 750.

The memory 740 is configured to store a preset relational database, where the relational database stores a correspondence between each network resource and each configuration parameter and an interference parameter, and the interference parameter is used to indicate whether the antenna 720 camping on the network resource is interfered by a signal generated by the camera 710 that is started by using the configuration parameter.

The processor 730 is further configured to determine the interference parameter according to the preset relational database, the obtained network resource, and the obtained current configuration parameter.

The processor 730 is further configured to determine, according to the interference parameter, whether the antenna 720 is interfered by the signal generated by the camera 710.

In a possible implementation manner, the processor 730 is further configured to determine, according to the relational database stored in the memory 740, the configuration parameter by using which the antenna 720 camping on the network resource is not interfered.

In a possible implementation manner, the processor 730 is further configured to maintain the current configuration parameter unchanged when the antenna 720 is not interfered by the signal generated by the camera 710.

In a possible implementation manner, the processor 730 is further configured to restore the current configuration parameter of the camera 710 to a default configuration parameter when the electronic device does not successfully camp on the network.

In a possible implementation manner, the network resource includes the first one, the first two, or all of a frequency band, a channel, and a bandwidth.

In conclusion, according to the electronic device provided in this embodiment of the present invention, when a camera is started and an electronic device successfully camps on the network, whether an antenna is interfered by a signal generated by the camera is detected, and if the antenna is interfered by the signal generated by the camera, a configuration parameter by using which the antenna is not interfered is configured for the camera. When the antenna is interfered by the camera, a configuration parameter by using which the antenna is not interfered may be configured again for the camera. That is, the interference from the camera to the antenna can be eliminated by changing the configuration parameter of the camera, so as to resolve the problem that a connector of a camera module leaks some signals, and consequently the antenna performance of the electronic device is affected. Therefore, interference from the camera to the antenna is eliminated, stability of the antenna performance is improved, and a disadvantage that interference from the camera to the antenna cannot be completely avoided by using hardware is overcome.

In addition, when it is detected that the electronic device changes from a state in which the antenna camps on the network to a state in which the antenna does not camp on the network, a default configuration parameter is configured for the camera again, so as to resolve a problem that user shooting experience is relatively poor because the camera still operates by using a non-default configuration parameter when the electronic device does not camp on the network. Therefore, user shooting experience and shooting quality are improved.

In addition, a network resource on which the antenna camps is obtained in real time, whether the antenna is interfered by a signal generated by the camera is determined, and a configuration parameter by using which the antenna is not interfered is configured for the camera in real time when the antenna is interfered, so as to resolve a problem that, in an operating process of the camera, after the network resource of the network on which the electronic device camps changes, the camera interferes with the changed network resource. Therefore, stability of antenna performance is improved.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing apparatus and unit, refer to a corresponding process in the foregoing method embodiments, and details are not described herein again.

In the several embodiments provided in the present application, it should be understood that the disclosed apparatus and method may be implemented in other manners. For example, the described apparatus embodiment is merely an example. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A method for preventing a camera from causing intermodulation interference with an antenna, applied to an electronic device comprising the camera and the antenna, wherein the method comprises the steps of:
after the camera is started, detecting (101) whether the electronic device successfully camps on a network;
if the electronic device successfully camps on the network, obtaining (102) a network resource on which the electronic device camps, and a current configuration parameter of the camera;
determining (103) whether the antenna is interfered by a signal generated by the camera;
if the antenna is interfered by the signal generated by the camera, obtaining (104) a configuration parameter of the camera the use of which the camera does not cause interference with the antenna; and
modifying (105) the current configuration parameter of the camera by using the obtained configuration parameter the use of which the camera does not cause interference with the antenna;
wherein the step of determining whether the antenna is interfered by a signal generated by the camera comprises the steps of:
determining an interference parameter according to a preset relational database, the obtained network resource, and the obtained current configuration parameter, wherein the relational database stores a correspondence between each network resource and each configuration parameter and an interference parameter, and the interference parameter indicates whether the antenna camping on the network resource is interfered by a signal generated by the camera that is started by using the configuration parameter; and
determining, according to the interference parameter, whether the antenna is interfered by the signal generated by the camera;
wherein, the configuration parameter of the camera comprises a camera resolution and a camera frame rate;
wherein the step of obtaining a configuration parameter the use of which the camera does not cause interference with the antenna comprises the step of:
determining, according to the relational database, the configuration parameter the use of which the camera does not cause interference with the antenna camping on the network resource.

2. The method according to claim 1, wherein the method further comprises the step of:
maintaining the current configuration parameter unchanged if the antenna is not interfered by the signal generated by the camera.

3. The method according to claim 1 or 2, wherein the method further comprises the step of:
restoring the current configuration parameter of the camera to a default configuration parameter if the electronic device does not successfully camp on the network.

4. The method according to any one of claims 1 to 3, wherein the network resource comprises the first one, the first two, or all of a frequency band, a channel, and a bandwidth.

5. An apparatus for preventing a camera from causing intermodulation interference with an antenna, applied to an electronic device comprising the camera and the antenna, wherein the apparatus comprises:
a detection module (410), configured to: after the camera is started, detect whether the electronic device successfully camps on a network;
a first obtaining module (420), configured to: when the detection module detects that the electronic device successfully camps on the network, obtain a network resource on which the electronic device camps, and a current configuration parameter of the camera;
a determining module (430), configured to determine whether the antenna is interfered by a signal generated by the camera;
a second obtaining module (440), configured to: when the determining module determines that the antenna is interfered by the signal generated by the camera, obtain a configuration parameter the use of which the camera does not cause interference with the antenna; and
a modification module (450), configured to modify the current configuration parameter of the camera that is obtained by the first obtaining module, by using the configuration parameter the use of which the camera does not cause interference with the antenna and that is obtained by the second obtaining module;
wherein the determining module is specifically configured to:
determine an interference parameter according to a preset relational database, the obtained network resource, and the obtained current configuration parameter, wherein the relational database is configured to store a correspondence between each network resource and each configuration parameter and an interference parameter, and the interference parameter indicates whether the antenna camping on the network resource is interfered by a signal generated by the camera that is started by using the configuration parameter; and
determine, according to the interference parameter, whether the antenna is interfered by the signal generated by the camera;
wherein, the configuration parameter of the camera comprises a camera resolution and a camera frame rate;
wherein the second obtaining module is specifically configured to:
determine, according to the relational database, the configuration parameter the use of which the camera does not cause interference with the antenna camping on the network resource.

6. The apparatus according to claim 5, wherein the modification module is further configured to maintain the current configuration parameter unchanged when the determining module determines that the antenna is not interfered by the signal generated by the camera.

7. The apparatus according to claim 5 or 6, wherein the modification module is further configured to restore the current configuration parameter of the camera to a default configuration parameter when the detection module detects that the electronic device does not successfully camp on the network.

8. The apparatus according to any one of claims 5 to 7, wherein the network resource comprises the first one, the first two, or all of a frequency band, a channel, and a bandwidth.

9. An electronic device, wherein the electronic device comprises a camera and an antenna, and the electronic device further comprises an apparatus according to any of claims 5 to 8.

## Patentansprüche

1. Verfahren zum Verhindern, dass eine Kamera Intermodulationsinterferenzen mit einer Antenne verursacht, angewendet auf ein elektronisches Gerät, umfassend die Kamera und die Antenne, wobei das Verfahren die folgenden Schritte umfasst:
nachdem die Kamera gestartet ist, Detektieren (101), ob das elektronische Gerät erfolgreich auf einem Netzwerk liegt;
wenn das elektronische Gerät erfolgreich auf dem Netzwerk liegt, Abrufen (102) einer Netzwerkressource, auf der das elektronische Gerät liegt, und eines aktuellen Auslegungsparameters der Kamera;
Bestimmen (103), ob es Interferenzen zwischen der Antenne und einem von der Kamera erzeugten Signal gibt;
wenn es Interferenzen zwischen der Antenne und dem von der Kamera erzeugten Signal gibt, Abrufen (104) eines Auslegungsparameters der Kamera, bei dessen Verwendung die Kamera keine Interferenzen mit der Antenne verursacht; und
Modifizieren (105) des aktuellen Auslegungsparameters der Kamera durch Verwenden des abgerufenen Auslegungsparameters, bei dessen Verwendung die Kamera keine Interferenzen mit der Antenne verursacht;
wobei der Schritt des Bestimmens, ob es Interferenzen zwischen der Antenne und einem von der Kamera erzeugten Signal gibt, die folgenden Schritte umfasst:
Bestimmen eines Interferenzparameters entsprechend einer voreingestellten relationalen Datenbank, der abgerufenen Netzwerkressource und des abgerufenen aktuellen Auslegungsparameters, wobei die relationale Datenbank eine Entsprechung zwischen jeder Netzwerkressource und jedem Auslegungsparameter und einem Interferenzparameter speichert, und wobei der Interferenzparameter anzeigt, ob es Interferenzen zwischen der Antenne und einem von der Kamera erzeugten Signal gibt, das durch Verwenden des Auslegungsparameters gestartet wird; und
Bestimmen, entsprechend dem Interferenzparameter, ob es Interferenzen zwischen der Antenne und dem von der Kamera erzeugten Signal gibt;
wobei der Auslegungsparameter der Kamera eine Kameraauflösung und eine Kamerabildrate umfasst;
wobei der Schritt des Abrufens eines Auslegungsparameters, bei dessen Verwendung die Kamera keine Interferenzen mit der Antenne verursacht, die folgenden Schritte umfasst:
Bestimmen, entsprechend der relationalen Datenbank, des Auslegungsparameters, bei dessen Verwendung die Kamera keine Interferenzen mit der Antenne verursacht, die auf der Netzwerkressource liegt.

2. Verfahren nach Anspruch 1, wobei das Verfahren ferner den folgenden Schritt umfasst:
Unveränderthalten des aktuellen Auslegungsparameters, wenn es keine Interferenzen zwischen der Antenne und dem von der Kamera erzeugten Signal gibt.

3. Verfahren nach Anspruch 1 oder 2, wobei das Verfahren ferner den folgenden Schritt umfasst:
Wiederherstellen des aktuellen Auslegungsparameters der Kamera auf einen Standardauslegungsparameter, wenn das elektronische Gerät nicht erfolgreich auf dem Netzwerk liegt.

4. Verfahren nach einem der Ansprüche 1 bis 3, wobei die Netzwerkressource den ersten einen, die ersten zwei oder alle aus einem Frequenzband, einem Kanal und einer Bandbreite umfasst.

5. Einrichtung zum Verhindern, dass eine Kamera Intermodulationsinterferenzen mit einer Antenne verursacht, angewendet auf ein elektronisches Gerät, umfassend die Kamera und die Antenne, wobei die Einrichtung Folgendes umfasst:
ein Detektionsmodul (410), ausgelegt zum: nachdem die Kamera gestartet ist, Detektieren, ob das elektronische Gerät erfolgreich auf einem Netzwerk liegt;
ein erstes Abrufmodul (420), ausgelegt zum: wenn das Detektionsmodul detektiert, dass das elektronische Gerät erfolgreich auf dem Netzwerk liegt, Abrufen einer Netzwerkressource, auf der das elektronische Gerät liegt, und eines aktuellen Auslegungsparameters der Kamera;
ein Bestimmungsmodul (430), ausgelegt zum Bestimmen, ob es Interferenzen zwischen der Antenne und einem von der Kamera erzeugten Signal gibt;
ein zweites Abrufmodul (440), ausgelegt zum: wenn das Bestimmungsmodul bestimmt, dass es Interferenzen zwischen der Antenne und dem von der Kamera erzeugten Signal gibt, Abrufen eines Auslegungsparameters, bei dessen Verwendung die Kamera keine Interferenzen mit der Antenne verursacht; und
ein Modifikationsmodul (450), ausgelegt zum Modifizieren des aktuellen Auslegungsparameters der Kamera, der durch das erste Abrufmodul abgerufen wird, durch Verwenden des Auslegungsparameters, bei dessen Verwendung die Kamera keine Interferenzen mit der Antenne verursacht und der durch das zweite Abrufmodul abgerufen wird;
wobei das Bestimmungsmodul spezifisch ausgelegt ist zum:
Bestimmen eines Interferenzparameters entsprechend einer voreingestellten relationalen Datenbank, der abgerufenen Netzwerkressource und des abgerufenen aktuellen Auslegungsparameters, wobei die relationale Datenbank dazu ausgelegt ist, eine Entsprechung zwischen jeder Netzwerkressource und jedem Auslegungsparameter und einem Interferenzparameter zu speichern, und wobei der Interferenzparameter anzeigt, ob es Interferenzen zwischen der Antenne und einem von der Kamera erzeugten Signal gibt, das durch Verwenden des Auslegungsparameters gestartet wird; und
Bestimmen, entsprechend dem Interferenzparameter, ob es Interferenzen zwischen der Antenne und dem von der Kamera erzeugten Signal gibt;
wobei der Auslegungsparameter der Kamera eine Kameraauflösung und eine Kamerabildrate umfasst;
wobei das zweite Abrufmodul spezifisch ausgelegt ist zum:
Bestimmen, entsprechend der relationalen Datenbank, des Auslegungsparameters, bei dessen Verwendung die Kamera keine Interferenzen mit der Antenne verursacht, die auf der Netzwerkressource liegt.

6. Einrichtung nach Anspruch 5, wobei das Modifikationsmodul ferner dazu ausgelegt ist, den aktuellen Auslegungsparameter unverändert zu lassen, wenn das Bestimmungsmodul bestimmt, dass es keine Interferenzen zwischen der Antenne und dem von der Kamera erzeugten Signal gibt.

7. Einrichtung nach Anspruch 5 oder 6, wobei das Modifikationsmodul ferner dazu ausgelegt ist, den aktuellen Auslegungsparameter der Kamera auf einen Standardauslegungsparameter wiederherzustellen, wenn das Detektionsmodul detektiert, dass das elektronische Gerät nicht erfolgreich auf dem Netzwerk liegt.

8. Einrichtung nach einem der Ansprüche 5 bis 7, wobei die Netzwerkressource den ersten einen, die ersten zwei oder alle aus einem Frequenzband, einem Kanal und einer Bandbreite umfasst.

9. Elektronisches Gerät, wobei das elektronische Gerät eine Kamera und eine Antenne umfasst, und wobei das elektronische Gerät ferner eine Einrichtung nach einem der Ansprüche 5 bis 8 umfasst.

## Revendications

1. Procédé destiné à empêcher une caméra de provoquer une interférence par intermodulation avec une antenne, appliqué à un dispositif électronique comportant la caméra et l'antenne, le procédé comportant les étapes consistant :
après que la caméra a été démarrée, à détecter (101) si le dispositif électronique réussit à stationner sur un réseau ;
si le dispositif électronique réussit à stationner sur le réseau, à obtenir (102) une ressource de réseau sur laquelle stationne le dispositif électronique, et un paramètre actuel de configuration de la caméra ;
à déterminer (103) si l'antenne subit l'interférence d'un signal généré par la caméra ;
si l'antenne subit l'interférence du signal généré par la caméra, à obtenir (104) un paramètre de configuration de la caméra dont l'utilisation par la caméra ne provoque pas d'interférence avec l'antenne ; et
à modifier (105) le paramètre actuel de configuration de la caméra en utilisant le paramètre de configuration obtenu dont l'utilisation par la caméra ne provoque pas d'interférence avec l'antenne ;
l'étape consistant à déterminer si l'antenne subit l'interférence d'un signal généré par la caméra comportant les étapes consistant à :
déterminer un paramètre d'interférence d'après une base de données relationnelle prédéfinie, la ressource de réseau obtenue et le paramètre actuel de configuration obtenu , la base de données relationnelle conservant une correspondance entre chaque ressource de réseau et chaque paramètre de configuration et un paramètre d'interférence, et le paramètre d'interférence indiquant si l'antenne stationnant sur la ressource de réseau subit l'interférence d'un signal généré par la caméra qui est démarrée en utilisant le paramètre de configuration ; et
déterminer, d'après le paramètre d'interférence, si l'antenne subit l'interférence du signal généré par la caméra ;
le paramètre de configuration de la caméra comportant une résolution de caméra et une fréquence de trames de caméra ;
l'étape d'obtention d'un paramètre de configuration dont l'utilisation par la caméra ne provoque pas d'interférence avec l'antenne comportant l'étape consistant à :
déterminer, d'après la base de données relationnelle, le paramètre de configuration dont l'utilisation par la caméra ne provoque pas d'interférence avec l'antenne stationnant sur la ressource de réseau.

2. Procédé selon la revendication 1, le procédé comportant en outre l'étape consistant à :
maintenir le paramètre actuel de configuration inchangé si l'antenne ne subit pas l'interférence du signal généré par la caméra.

3. Procédé selon la revendication 1 ou 2, le procédé comportant en outre l'étape consistant à :
rétablir le paramètre actuel de configuration de la caméra à un paramètre de configuration par défaut si le dispositif électronique ne réussit pas à stationner sur le réseau.

4. Procédé selon l'une quelconque des revendications 1 à 3, la ressource de réseau comportant le premier élément, les deux premiers éléments ou l'ensemble d'une bande de fréquences, d'un canal et d'une largeur de bande.

5. Appareil destiné à empêcher une caméra de provoquer une interférence par intermodulation avec une antenne, appliqué à un dispositif électronique comportant la caméra et l'antenne, l'appareil comportant :
un module (410) de détection, configuré pour :
après que la caméra a été démarrée, détecter si le dispositif électronique réussit à stationner sur un réseau ;
un premier module (420) d'obtention, configuré pour :
lorsque le module de détection détecte que le dispositif électronique réussit à stationner sur le réseau, obtenir une ressource de réseau sur laquelle stationne le dispositif électronique, et un paramètre actuel de configuration de la caméra ;
un module (430) de détermination, configuré pour déterminer si l'antenne subit l'interférence d'un signal généré par la caméra ;
un deuxième module (440) d'obtention, configuré pour :
lorsque le module de détermination détermine que l'antenne subit l'interférence du signal généré par la caméra, obtenir un paramètre de configuration dont l'utilisation par la caméra ne provoque pas d'interférence avec l'antenne ; et
un modification module (450), configuré pour modifier le paramètre actuel de configuration de la caméra qui est obtenu par le premier module d'obtention, en utilisant le paramètre de configuration dont l'utilisation par la caméra ne provoque pas d'interférence avec l'antenne et qui est obtenu par le deuxième module d'obtention ;
le module de détermination étant spécifiquement configuré pour :
déterminer un paramètre d'interférence d'après une base de données relationnelle prédéfinie, la ressource de réseau obtenue et le paramètre actuel de configuration obtenu, la base de données relationnelle étant configurée pour conserver une correspondance entre chaque ressource de réseau et chaque paramètre de configuration et un paramètre d'interférence, et le paramètre d'interférence indiquant si l'antenne stationnant sur la ressource de réseau subit l'interférence d'un signal généré par la caméra qui est démarrée en utilisant le paramètre de configuration ; et
déterminer, d'après le paramètre d'interférence, si l'antenne subit l'interférence du signal généré par la caméra ;
le paramètre de configuration de la caméra comportant une résolution de caméra et une fréquence de trames de caméra ;
le deuxième module d'obtention étant spécifiquement configuré pour :
déterminer, d'après la base de données relationnelle, le paramètre de configuration dont l'utilisation par la caméra ne provoque pas d'interférence avec l'antenne stationnant sur la ressource de réseau.

6. Appareil selon la revendication 5, le module de modification étant en outre configuré pour maintenir le paramètre actuel de configuration inchangé lorsque le module de détermination détermine que l'antenne ne subit pas l'interférence du signal généré par la caméra.

7. Appareil selon la revendication 5 ou 6, le module de modification étant en outre configuré pour rétablir le paramètre actuel de configuration de la caméra à un paramètre de configuration par défaut lorsque le module de détection détecte que le dispositif électronique ne réussit pas à stationner sur le réseau.

8. Appareil selon l'une quelconque des revendications 5 à 7, la ressource de réseau comportant le premier élément, les deux premiers éléments ou l'ensemble d'une bande de fréquences, d'un canal et d'une largeur de bande.

9. Dispositif électronique, le dispositif électronique comportant une caméra et une antenne, et le dispositif électronique comportant en outre un appareil selon l'une quelconque des revendications 5 à 8.
